# EUROPEAN PATENT APPLICATION

(11) **EP 1 586 936 A1**
(43) Date of publication of application: **19.10.2005**
(21) Application number: 04703901.1
(22) Date of filing: 21.01.2004
(51) Int. Cl.: G02F 1/133, G09G 3/36, G09G 3/20

(54) **DISPLAY DEVICE, DISPLAY METHOD, LIQUID CRYSTAL DRIVE CIRCUIT, AND LIQUID CRYSTAL DRIVE METHOD**

(30) Priority: 21.01.2003 JP 2003012569
(71) Applicant: SONY CORPORATION, Tokyo 141-0001 (JP)
(72) Inventor: ODAKE, Ryota, c/o SONY CORPORATION, Shinagawa-ku, Tokyo 141-0001 (JP); UEDA, Mitsunori, c/o SONY CORPORATION, Shinagawa-ku, Tokyo 141-0001 (JP)
(74) Representative: Müller - Hoffmann & Partner
(86) International application number: PCT/JP2004/000482
(87) International publication number: WO 2004/066021

(57) **Abstract**

The present invention relates to a display device, display method, a liquid crystal driving circuit, and liquid crystal driving method, which enable cholesteric liquid crystal to be driven with a low voltage. Reference voltage GNDc supplied to a column driver and reference voltage GNDr supplied to a row driver are GND (0 V). GNDr is connected to row electrodes X1 to X3, and GNDc is connected to column electrodes Y1 to Y3. In addition, switches are controlled to supply voltage (V1+V2) to GNDr in a predetermined time width. Voltage (-V1-V2) is supplied to GNDc in a predetermined time width. This applies bipolar pulses of (V1+V2) to inter-pixel-electrode portions of pixels (X1, Y1) to (X3, Y3), whereby a cholesteric liquid crystal layer enters a planar state, so that the entire surface is reset to be in the planar state. The present invention can be applied to liquid crystal display devices and driving circuits for liquid crystal display devices.

## Description

### Technical Field

The present invention relates to display devices, display methods, liquid crystal driving circuits, and liquid crystal driving methods, and in particular to a display device, display method, liquid crystal driving circuit, and liquid crystal driving method suitable for use in displaying information by using cholesteric liquid crystal, and to a program and a recording medium.

### Background Art

In liquid crystal display devices, for example, simple matrix TN (Twisted Nematic) liquid crystal and STN (Super Twisted Nematic) liquid crystal, active matrix TFT (Thin Film Transistor) liquid crystal and MIM (Metal In Metal) liquid crystal, etc., are used.

In the simple matrix system, X-electrodes and Y-electrodes are arranged in grid form, and liquid crystal at the intersections is driven by switching on and off these electrodes with appropriate timing. Liquid crystal display devices using the simple matrix system have a small number of electrodes and can be easily produced. Accordingly, they are less expensive than products using the active matrix system. In the simple matrix system, since electrodes of liquid crystal cells forming pixels are not independent, a voltage interferes with surrounding cells, so that it is difficult to clearly display the pixels point by point. In addition, in the active matrix system, unlike the simple matrix system, each pixel is switched on and off (by respectively adding active elements to pixels for driving liquid crystal) for display. The active matrix system is superior in performance to the simple matrix system in terms of a greater response speed, less residual image, broader angle of view, etc. However, its production cost is higher.

In these display devices using liquid crystal, in order to maintain display of information, it is necessary to apply a voltage to the liquid crystal. When a voltage is applied to the liquid crystal for a predetermined period, a residual image phenomenon called "sticking" occurs. To prevent sticking, for example, a frame inversion technology in which voltages applied to pixel electrodes are inverted at predetermined intervals, or the like, is used. When a polarity inversion technology, such as frame inversion, is employed, the amplitude of a voltage applied to signal lines needs to be double that in the case of polar driving. Accordingly, to reduce the amplitude of the voltage applied to the signal lines by half, a common inversion technology, etc., is used.

Unlike the above-described liquid crystal display devices, in liquid crystal display devices using cholesteric liquid crystal, an applied voltage causes a change of state (planar and focal conic states), and this is used to display information. Furthermore, previously displayed information can be held without supplying power (e.g., *"Ekisho Debaisu Handobukku* (Liquid Crystal Device Handbook)" issued on September 29, 1989, by Nikkan Kogyo Shimbun, Ltd., pp. 352-355).

Cholesteric liquid crystal selectively reflects light having a wavelength corresponding to the thickness of a liquid crystal helical layer when in its planar state, and is almost transparent when in its focal conic state.

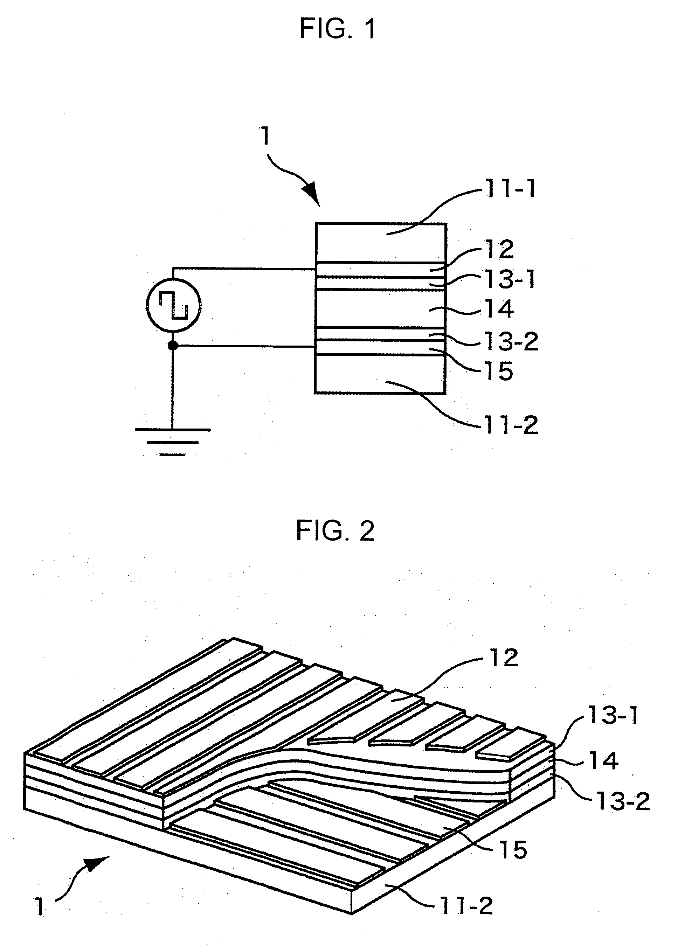

By using Figs. 1 and 2, the configuration of a cholesteric liquid crystal panel 1 is described. Fig. 1 is a sectional view of the cholesteric liquid crystal panel 1, and Fig. 2 is a view illustrating the configuration of two groups of electrodes in the cholesteric liquid crystal panel 1.

On a glass substrate 11-1, transparent column electrodes (ITO: Indium Tin Oxide) 12 are deposited (or sputtered) in the form of stripes, and, on a glass substrate 11-2, transparent row electrodes (ITO: Indium Tin Oxide) 15 are deposited (or sputtered) in the form of stripes. On surfaces of the glass substrates 11-1 and 11-2 on which the transparent column electrodes 12 and the transparent row electrodes 15 are deposited, polyimide layers 13-1 and 13-2 each having a thickness of approximately several micrometers are formed, respectively.

The glass substrates 11-1 and 11-2, which are provided with the electrodes, as described above, are bonded to each other, having a gap thickness of several micrometers (e.g., approximately 5 µm), with a gap material or the like so that the stripes of the transparent column electrodes 12 and the stripes of the transparent row electrodes 15 cross and that both oppose each other. The gap between the glass substrates 11-1 and 11-2 is filled with cholesteric liquid crystal by using, for example, vacuum filing, whereby a cholesteric liquid crystal film 14 is formed.

For the cholesteric liquid crystal panel 1, polyimide layer alignment, provision of.polarizers on the glass substrates, etc., as in the case of commonly used TN liquid crystal or the like, are not required.

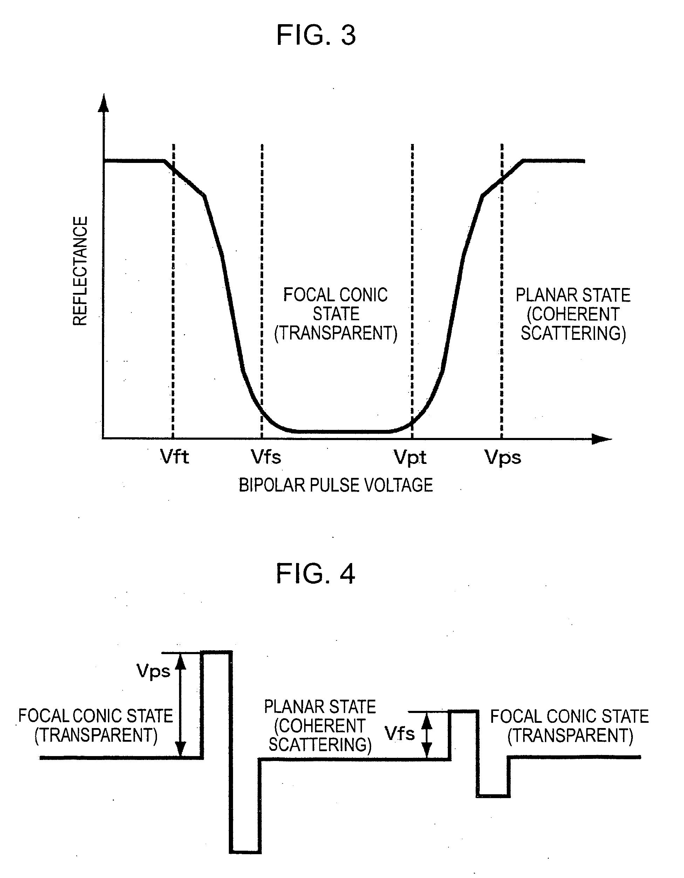

Cholesteric liquid crystal has special helical structure as a molecular structure. The state of the cholesteric liquid crystal is changed since the helical structure is changed by the value of a bipolar pulse voltage applied to the cholesteric liquid crystal. As shown in Fig. 3, cholesteric liquid crystal has two stable states, a focal conic state and a planar state, based on the value of an applied bipolar pulse voltage. The planar state is a state in which a specified wavelength band of light is coherently scattered, and the focal conic state is a state in which light is transmitted in a wide band.

Accordingly, the cholesteric liquid crystal panel 1 can display information by using a first color determined based on a wavelength band reflected in the planar state and a second color in which, when the cholesteric liquid crystal panel 1 is transparent in the focal conic state, the second color is transmitted by the liquid crystal to be visible. In other words, in the cholesteric liquid crystal panel 1, for example, by setting the cholesteric liquid crystal to diffusely reflect light of a specified wavelength band in the planar state, and blackening a portion under the cholesteric liquid crystal layer 14 so that the black color is transmitted to be visible in the focal conic state, whereby monotone display of the specified wavelength color and black color can be performed.

As shown in Fig. 3, the voltage value Vps of the bipolar pulse voltage required for changing the state of the cholesteric liquid crystal to the planar state is approximately double the voltage value Vfs of the bipolar pulse voltage required for changing to the focal conic state.

After the cholesteric liquid crystal is set to the focal conic state or the planar state by applying a bipolar pulse voltage to predetermined pixel electrodes, the set state can be held if no voltage is applied. When the bipolar pulse voltage is applied again, its voltage value can change the state of the cholesteric liquid crystal, if necessary. In other words, the cholesteric liquid crystal panel 1 using cholesteric liquid crystal can maintain information displayed by applying the bipolar pulse voltage without being subsequently supplied with power.

Fig. 4 shows an example of a driving voltage waveform applied to the pixel electrodes when display of predetermined pixels in the cholesteric liquid crystal panel 1 is changed. When, in the focal conic state, the bipolar pulses of voltage Vps are applied to the predetermined pixel electrodes, the planar state is activated to change the displayed color to the first color. When, in the planar state, the bipolar pulses of voltage Vfs are applied to the predetermined pixel electrodes, the focal conic state is activated to change the displayed color from the first color to the second color.

In the cholesteric liquid crystal panel 1, after the displayed information is temporarily reset, for example, such that the entire display surface is set to the planar state by applying the bipolar pulses of voltage value Vsp to the entire panel, predetermined information is displayed such that the state is changed to the focal conic state by applying the bipolar pulses of voltage value Vfs to the pixel electrodes at necessary positions, and no voltage is applied after that, whereby the displayed information can be held.

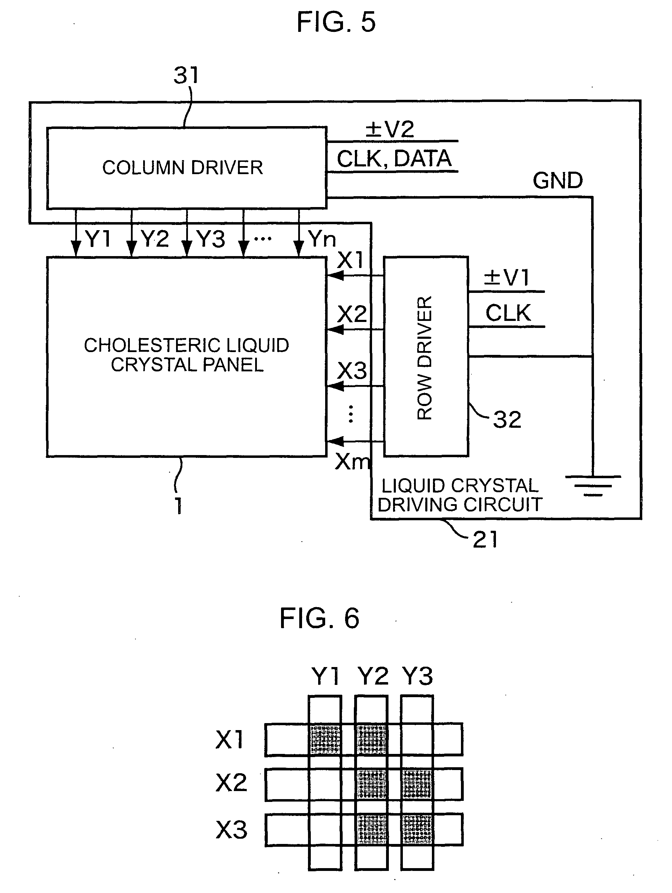

Fig. 5 is a block diagram showing an example of the configuration of a liquid crystal driving circuit 21 of the related art for driving the cholesteric liquid crystal panel 1. Here, the cholesteric liquid crystal panel 1 is described assuming that it displays information of n × m pixels.

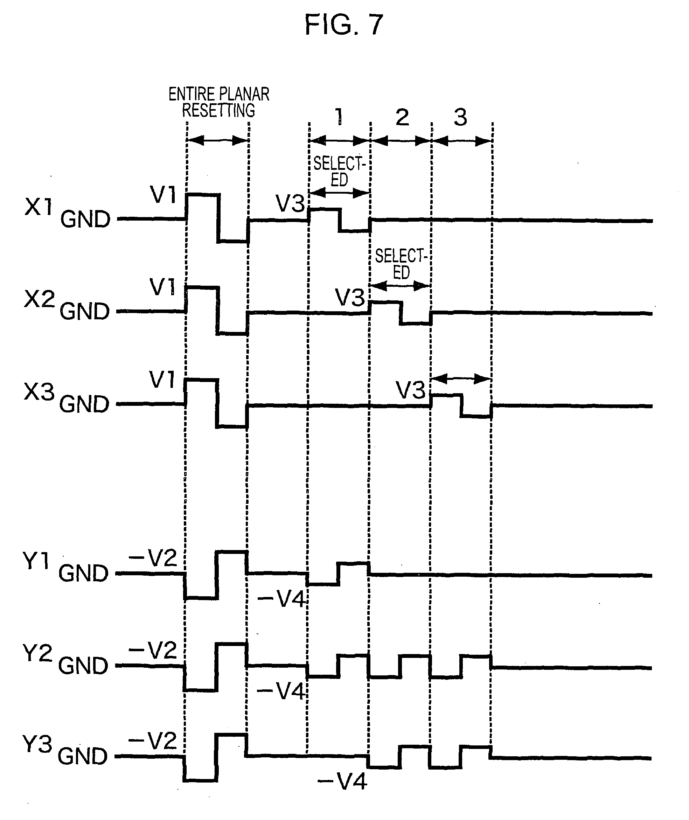

A column driver 31 is supplied with a clock (CLK) signal and a data (DATA) signal representing information to be displayed on the cholesteric liquid crystal panel 1 and is connected to driving voltage ±V2 and GND (0 V). It applies a predetermined voltage to column (signal) electrodes Y1 to Yn of the transparent column electrodes 12 in the cholesteric liquid crystal panel 1 with predetermined timing, which is described later by using Fig. 7.

A row driver 32 is supplied the clock (CLK) signal and is connected to driving voltage ±V1 and GND which is common to GND supplied to the column driver 31. It applies a predetermined voltage to row (scanning) electrodes X1 to Xm of the transparent row electrodes 15 in the cholesteric liquid crystal panel 1 with predetermined timing, which is described later by using Fig. 7.

Here, driving voltage V1 and driving voltage V2 are voltage values satisfying V1+V2 > Vps.

Next, a specific example of the case of using two colors (two colors, that is, a specified wavelength color and black, and, when the specified wavelength color is, for example, white, the pixels are displayed in two colors, black and white) to display nine pixels composed of 3 × 3 pixels is described.

For example, a case in which, as shown in Fig. 6, among nine pixels composed of 3 × 3 pixels, six pixels, (X1, Y1), (X1, Y2), (X2 , Y2), (X2 , Y3), (X3 , Y2), and (X3 , Y3), are displayed in black and the other three pixels are displayed in the specified wavelength color is described. Display of the specified wavelength color is a state in which light having the specified wavelength color is coherently scattered by the cholesteric liquid crystal, which is in the planar state, and display of black is a state in which block is displayed after being transmitted by the cholesteric liquid crystal, which is in the focal conic state.

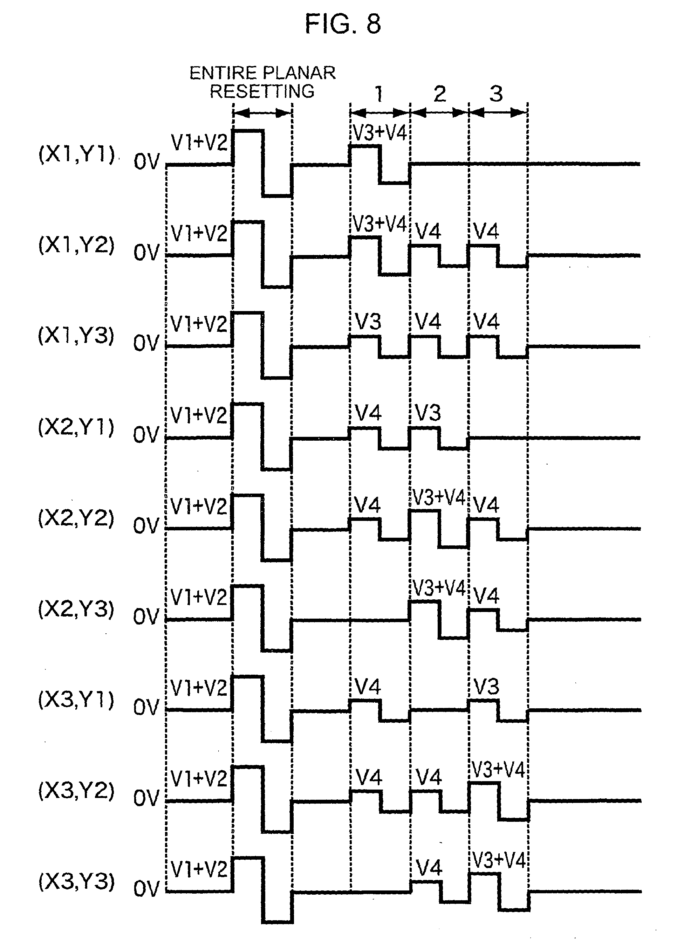

Figs. 7 and 8 are timing charts showing the operation of the column driver 31 and the row driver 32. Fig. 7 is a timing chart showing the voltage and timing of bipolar pulses applied to column electrodes X1 to X2 by the column driver 31, and the voltage and timing of bipolar pulses applied to row electrodes Y1 to Y3 by the row driver 32, for allowing the cholesteric liquid crystal panel 1 to display information of nine pixels composed of 3 × 3 pixels as shown in Fig. 6. Fig. 8 is a timing chart illustrating bipolar pulses which are applied to inter-pixel-electrode portions (electrode portions serving as intersections of the transparent column electrodes 12 and the transparent row electrodes 15) of nine pixels, composed of 3 × 3 pixels, (X1, Y1) to (X3, Y3), having the applied voltage described by using Fig. 7.

At first, to reset information presently held, as shown in Fig. 7, bipolar pulses having voltage V1 are applied to column electrodes Y1 to Y3, and bipolar pulses having voltage -V2 are applied to row electrodes X1 to X3. Accordingly, as shown in Fig. 8, bipolar pulses having V1+V2 are applied to the inter-pixel-electrode portions corresponding to pixels (X1, Y1) to (X3, Y3). Here, since V1+V2 > Vps, the cholesteric liquid crystal layer 14 between the transparent column electrodes 12 and the transparent row electrodes 15 enters the planar state to coherently reflect specified wavelength light. In other words, all the pixels (X1, Y1) to (X3, Y3) display the specified wavelength color (this is referred to as entire planar resetting).

After that, as shown in Fig. 7, the row driver 32 selects one row electrode by applying bipolar pulses having voltage V3 to sequentially scan from row electrode X1 to row electrodes X2 and X3. In addition, the column driver 31 selectively applies inverse-characteristic bipolar pulses -V4 to column electrodes Y1 to Y3 in response to the row electrode selecting timing. Here, V3+V4 > Vfs, where V1 > V3 and V2 > V4.

As shown in Fig. 8, a bipolar pulse voltage of V3+V4 > Vfs is applied to the six pixels, (X1, Y1), (X1, Y2), (X2, Y2), (X2, Y3), (X3, Y2), and (X3, Y3), which correspond to the pixel electrodes to which the bipolar pulses are applied to the row and column electrodes with the same timing. Thus, the cholesteric liquid crystal layer 14 between two groups of electrodes, the transparent column electrodes 12 and the transparent row electrodes 15, which are at the corresponding pixel positions, enters the focal conic state to become transparent. In other words, the six pixels, (X1, Y1), (X1, Y2), (X2, Y2), (X2, Y3), (X3, Y2), and (X3, Y3), are displayed in black.

In addition, V3+V4 > Vfs, and voltage value Vps is approximately double the voltage value Vfs. Thus, V1+V2 > V3+V4 holds.

As described above, after temporarily performing entire planar resetting on the display on the cholesteric liquid crystal panel 1, by inverting the color of arbitrary pixels from the specified wavelength color to black, information can be displayed.

The driving voltage required for the column driver 31 and row driver 32 in the liquid crystal driving circuit 21 described by using Fig. 5 to drive the cholesteric liquid crystal panel 1 is the lowest value of (V1+V2)/2 when V1 = V2. Thus, the breakdown voltages of the column driver 31 and the row driver 32 must be not less than (V1+V2)/2.

Although bipolar pulse voltage Vps for changing the state to the planar state and bipolar pulse voltage Vfs for changing the state to the focal conic state differ depending on inter-electrode gap thickness, for example, when the gap thickness is 5 µm, it is required that Vps = approximately 40 V, and Vfs = approximately 20 V. Accordingly, to satisfy V1+V2 > Vps, the column driver 31 and the row driver 32 each require a breakdown voltage of approximately 20 V.

As described above, unlike the fact that ordinary TN liquid crystal can be driven with several volts, drivers for driving cholesteric liquid crystal need to have very high breakdown voltages. Accordingly, it is very difficult to reduce the size and cost of driving circuits and battery.

### Disclosure of Invention

The present invention has been made in view of such circumstances, and is intended to realize low voltage driving circuits for driving cholesteric liquid crystal.

A display device of the present invention comprises a display means in which, by applying voltages to first electrodes and second electrodes, the state of cholesteric liquid crystal is changed to display information, a first driving means for applying a voltage to the first electrodes, a second driving means for applying a voltage to the second electrodes, and a control means for controlling the operation of the first driving means and the second driving means, the voltage value of a first reference voltage supplied to the first driving means, and the voltage value of a second reference voltage supplied to the second driving means. When the control means sets the cholesteric liquid crystal to a planar state, the control means controls the operation of the first driving means and the second driving means so that the first driving means applies the first reference voltage to the first electrodes and the second driving means applies the second reference voltage to the second electrodes, and controls the voltage values of the first reference voltage and the second reference voltage so that the cholesteric liquid crystal exhibits the planar state.

The first driving means may be supplied with a first driving voltage having a voltage value different from that of the first reference voltage. The second driving means may be supplied with a second driving voltage having a voltage value different from that of the first reference voltage, and, when the control means sets the cholesteric liquid crystal to a focal conic state, the control means may control the operation of the first driving means and the second driving means so that the first driving means applies the first driving voltage to the first electrodes and the second driving means applies the second driving voltage to the second electrodes.

The display device may further comprise a first switching means for selectively switching the voltage value of the first reference voltage supplied to the driving means between a first voltage value and zero volts, and a second switching means for selectively switching the voltage value of the second reference voltage supplied to the second driving means between a second voltage value and zero volts, and, when the control means sets the cholesteric liquid crystal to the planar state, the control means may control the operation of the first driving means and the second driving means so that the first driving means applies the first reference voltage to the first electrodes and the second driving means applies the second reference voltage to the second electrodes, and may further control the first switching means and the second switching means so that the voltage value of the first reference voltage supplied to the first driving means is the first voltage value and the voltage value of the second reference voltage supplied to the second driving means is the second voltage value.

The display means may have the cholesteric liquid crystal, which has a plurality of portions reflecting light components having different wavelength bands in the planar state.

A display method of the present invention includes a first reference-voltage applying step of applying a first reference voltage to the first electrodes, a second reference-voltage applying step of applying a second reference voltage to the second electrodes, a first-reference-voltage control step of controlling the voltage value of the first reference voltage, a second-reference-voltage control step of controlling the voltage value of the second reference voltage, and a display control step of controlling the display of the information on the display device by applying, to the first electrodes and the second electrodes, a first driving voltage and a second driving voltage which differ from the first reference voltage and the second reference voltage.

In the display device and display method of the present invention, the first reference voltage is applied to the first electrodes, the second reference voltage is applied to the second electrodes, the voltage value of the first reference voltage is controlled, and the voltage value of the second reference voltage is controlled, whereby the cholesteric liquid crystal is changed to be in the planar state.

A liquid crystal driving circuit of the present invention comprises a first driving means for applying a voltage to first electrodes of liquid crystal display elements, a second driving means for applying a voltage to second electrodes of the liquid crystal display elements, and a control means for controlling the operation of the first driving means and the second driving means, the voltage value of a first reference voltage supplied to the first driving means, and the voltage value of a second reference voltage supplied to the second driving means, and, when the control means sets cholesteric liquid crystal to a planar state, the control means controls the operation of the first driving means and the second driving means so that the first driving means applies the first reference voltage to the first electrodes and the second driving means applies the second reference voltage to the second electrodes, and controls the voltage values of the first reference voltage and the second reference voltage so that the cholesteric liquid crystal exhibits the planar state.

A liquid crystal driving method of the present invention includes a first reference-voltage applying step of applying a first reference voltage to first electrodes, a second reference-voltage applying step of applying a second reference voltage to second electrodes, a first-reference-voltage control step of controlling the voltage value of the first reference voltage, a second-reference-voltage control step of controlling the voltage value of the second reference voltage, and a driving-voltage-application control step of controlling application to the first electrodes and the second electrodes of the first driving voltage and the second driving voltage, which differ from the first reference voltage and the second reference voltage.

In the liquid crystal driving circuit and liquid crystal driving method of the present invention, the first reference voltage is applied to the first electrodes, the second reference voltage is applied to the second electrodes, the voltage value of the first reference voltage is controlled, and the voltage value of the second reference voltage is controlled, whereby the cholesteric liquid crystal is changed to be in the planar state.

### Brief Description of the Drawings

Fig. 1 is an illustration of a cholesteric liquid crystal panel.
Fig. 2 is an illustration of the cholesteric liquid crystal panel.
Fig. 3 is a graph illustrating states of cholesteric liquid crystal and a bipolar pulse voltage applied.
Fig. 4 is a chart of a waveform for cholesteric liquid crystal.
Fig. 5 is a block diagram showing a liquid crystal driving circuit of the related art.
Fig. 6 is an illustration of an example of data displayed.
Fig. 7 is a timing chart showing, in the liquid crystal driving circuit in Fig. 5, voltages applied to row electrodes and column electrodes.
Fig. 8 is a timing chart showing, in the liquid crystal driving circuit in Fig. 5, bipolar pulse voltages each applied across the electrodes of each pixel in the cholesteric liquid crystal panel.
Fig. 9 is a block diagram showing a liquid crystal driving circuit to which the present invention is applied.
Fig. 10 is a timing chart showing, in the liquid crystal driving circuit in Fig. 9, voltages applied to row electrodes and column electrodes, and GND levels.
Fig. 11 is a timing chart showing, in the liquid crystal driving circuit in Fig. 9, bipolar pulse voltages each applied across the electrodes of each pixel in the cholesteric liquid crystal panel.
Fig. 12 is a flowchart illustrating processing of the liquid crystal driving circuit in Fig. 9.

### Best Mode for Carrying Out the Invention

An embodiment of the present invention is described below with reference to the drawings.

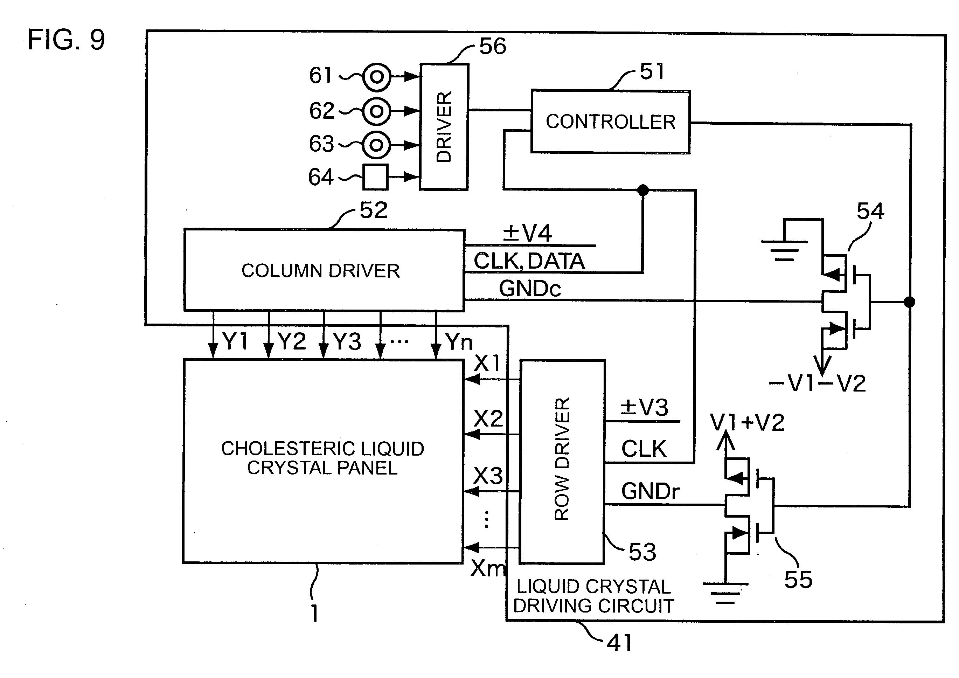

Fig. 9 is a block diagram showing the configuration of a liquid crystal driving circuit 41, for driving a cholesteric liquid crystal panel 1, to which the present invention is applied. The cholesteric liquid crystal panel 1, the liquid crystal driving circuit 41, and a power supply unit (e.g., a battery or the like), which is not shown, constitute a liquid crystal display device.

The cholesteric liquid crystal panel 1 is similar to the cholesteric liquid crystal panel of the related art, which is described by using Figs. 1 to 4.

In other words, in the cholesteric liquid crystal panel 1, when bipolar pulses by which the potential difference between pixel electrodes reaches Vps or greater is applied, cholesteric liquid crystal in a portion corresponding to the pixel position enters a planar state, whereby a corresponding pixel is displayed in first color determined based on a wavelength band reflected in the planar state. In addition, in the cholesteric liquid crystal panel 1, when bipolar pulses by which the potential difference between pixel electrodes reaches Vfs or greater, cholesteric liquid crystal corresponding to the pixel position enters a focal conic state, whereby a corresponding pixel is displayed in second color that becomes visible after being transmitted by liquid crystal.

Here, the cholesteric liquid crystal panel 1 is described assuming that a specific wavelength color and block are displayed in monotone such that the cholesteric liquid crystal is set to diffusely reflect light having specific wavelength color in the planar state, and that a portion under the cholesteric liquid crystal layer 14 is blackened and the black color is made transparently visible. The first color determined based on the wavelength band reflected in the planar state, that is, a specific wavelength color, may be any color such as, for example, green, blue, or red, and also the second color that becomes visible after being transmitted by the liquid crystal may be any color.

Furthermore, obviously, by providing a plurality of cholesteric liquid crystal layers 14 that respectively reflect different wavelength bands in the planar state, multicolor display with the cholesteric liquid crystal panel 1 can be performed.

In addition, as shown in Fig. 3, the voltage value Vps of the bipolar pulse voltage required for changing the cholesteric liquid crystal state to the planar state is approximately the double the voltage vale Vfs of the bipolar pulse voltage required for changing to the focal conic state.

In the cholesteric liquid crystal panel 1, after displayed information is reset (entire planar resetting) by, for example, applying bipolar pulses having voltage value Vps to the entirety of the panel so that the entire display surface is in the planar state, predetermined information is displayed by applying bipolar pulses having voltage value Vfs to pixel electrodes at necessary positions so that the state is changed to the focal conic state, and, after that, the displayed information is held by applying no voltage.

A controller 51 controls a column driver 52 and a row driver 53, supplies the column driver 52 with a clock (CLK) signal and data (DATA) representing information to be displayed on the cholesteric liquid crystal panel 1, and supplies the row driver 53 with the clock (CLK) signal. In addition, by controlling switching of switches 54 and 55, the voltage values of GNDc, which is a reference voltage supplied to the column driver 52, and GNDr, which is a reference voltage connected to the row driver 53, are switched with predetermined timing.

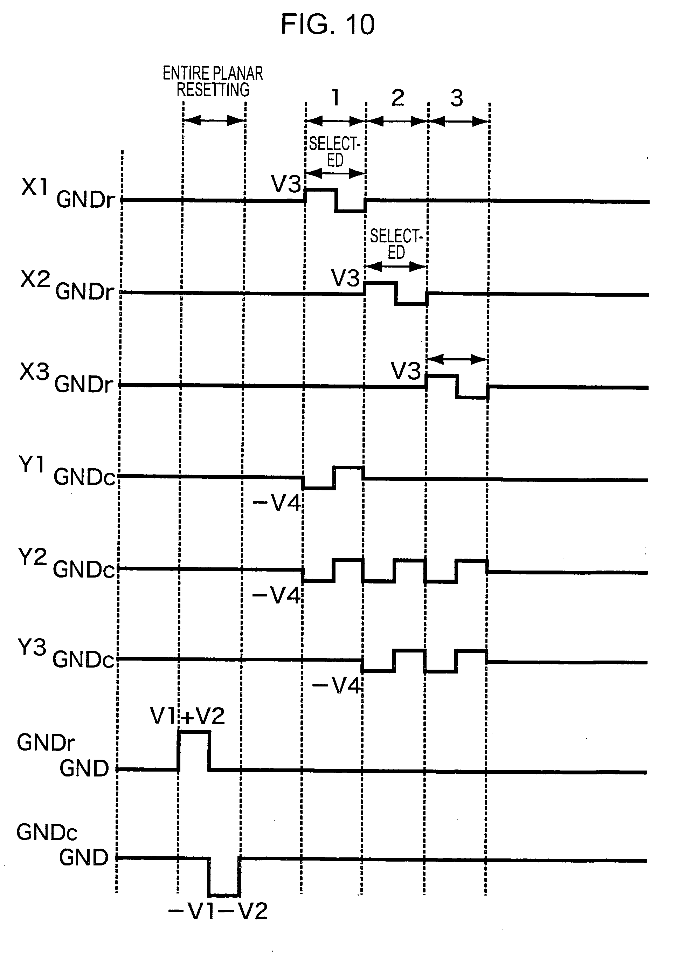

The column driver 52 is supplied with the clock (CLK) signal and data (DATA) signal for displaying information on the cholesteric liquid crystal panel 1 from the controller 51. The column driver 52 is also connected to driving voltage ±V4 and reference voltage GNDc, and is controlled by the controller 51 to apply, with predetermined timing, which is described later by using Fig. 10, a predetermined voltage to column (signal) electrodes Y1 to Yn of transparent column electrodes 12 in the cholesteric liquid crystal panel 1.

The row driver 53 is supplied with the clock (CLK) signal from the controller 51. In addition, it is connected to driving voltage ±V3 and reference voltage GNDr, and is controlled by the controller 51 to apply, with predetermined timing, which is described later by using Fig. 10, a predetermined voltage to row (scanning) electrodes X1 to Xm of transparent row electrodes 15 in the cholesteric liquid crystal panel 1.

Here, voltage (-V1-V2) that is connected to reference voltage GND, or voltage (V1+V2) that is connected to reference voltage GNDr, by the switching of the switches 54 and 55, is a voltage value satisfying V1+V2 > Vps. In addition, voltage V4 supplied to the column driver 52 and voltage V3 supplied to the row driver 53 are voltage values which satisfy V3+V4 > Vfs and Vfs > V3 and Vfs > V4.

The switches 54 and 55 include switching elements such as, for example, FETs (Field Effect Transistors). Based on the control of the controller 51, the switch 54 switches the voltage value of reference voltage GNDc connected to the column driver 52 between (-V1-V2) and GND (0 V). Based on the control of the controller 51, the switch 55 switches the voltage value of reference voltage GNDr between (V1+V2) and GND (0 V).

As the switches 54 and 55, obviously, those other than the FETs may be used if they can switch the voltage value of GNDc connected to the column driver 52 or the voltage value of GNDr supplied to the row driver 53 based on the control of the controller 51.

In addition, a drive 56 is connected to the controller 51, if necessary. In the drive 56, a magnetic disk 61, an optical disk 62, a magneto-optical disk 63, or a semiconductor memory 64 can be loaded so that information can be sent and received.

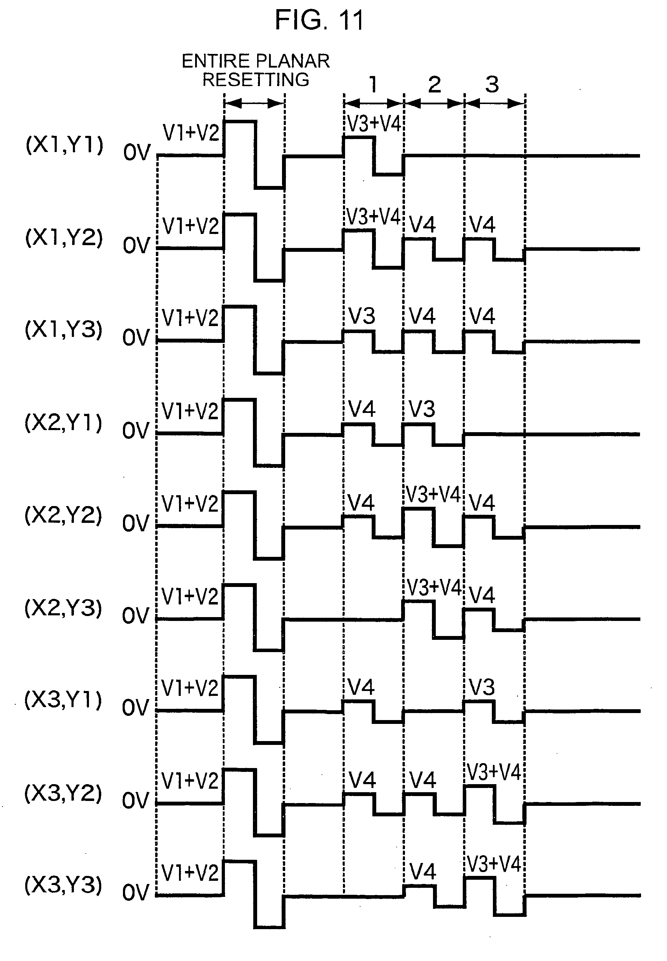

Figs. 10 and 11 are timing charts illustrating the operation of the column driver 52 and the row driver 53 in a case in which, after entire planar resetting is performed on the presently displayed information, the cholesteric liquid crystal panel 1 displays nine pixels, composed of 3 × 3 pixels in which six pixels, (X1, Y1), (X1, Y2), (X2, Y2), (X2, Y3), (X3, Y2), and (X3, Y3), are black and the other pixels are in specific wavelength color, as shown in Fig. 6.

Fig. 10 is a timing chart illustrating, in addition to the voltage and timing of bipolar pulses that are applied to column electrodes X1 to X3 by the column driver 52 in order to display information of nine pixels composed of 3 × 3 pixels as shown in Fig. 6 after entire planar resetting on the presently displayed information is performed, and the voltage and timing of bipolar pulses that are applied to row electrodes Y1 to Y3 by the row driver 53, and voltage that is given as reference voltage GNDc and reference voltage GNDr by the switching of the switches 54 and 55 and the timing thereof. Fig. 11 is a timing chart illustrating bipolar pulses that are applied to the nine pixels (X1, Y1) to (X3, Y3), which have 3 × 3 pixels, with the applied voltages described by using Fig. 10.

At first, the switches 54 and 55 are controlled by the controller 51, so that GNDc supplied to the column driver 52 and GNDr supplied to the row driver 53 have GND (0 V).

In order to reset the presently displayed information, bipolar pulses having a voltage equal to or greater than Vps must be applied to each of pixels (X1, Y1) to (X3, Y3). Based on the control of the controller 51, the row driver 53 applies GNDr to row electrodes X1 to X3, and the column driver 52 applies GNDc to column electrodes Y1 to Y3. In addition, as shown in Fig. 10, for entire planar resetting, the controller 51 controls the switch 55 to supply voltage (V1+V2) to GNDr in a predetermined time width (time width determined by an application time of bipolar pulses), and controls the switch 54 with the next timing to supply voltage (-V1-V2) to GNDc.

Accordingly, as shown in Fig. 11, the voltage output to row electrodes X1 to X3 by the row driver 53 is a pulse voltage of (V1+V2). In addition, the voltage output to column electrodes Y1 to Y3 by the column driver 52 is a pulse voltage of (-V1-V2), as shown in Fig. 11, and the application timing is timing subsequent to the application of GNDr to row electrodes X1 to X3.

Accordingly, as shown in Fig. 11, bipolar pulses of V1+V2 are applied to pixel electrodes corresponding to pixels (X1, Y1) to (X3, Y3). Here, V1+V2 > Vps. Thus, the cholesteric liquid crystal layer 14, between two electrodes, one transparent column electrode 12 and one transparent row electrode 15 at each corresponding pixel position, enters the planar state to coherently scatter specified wavelength light. Specifically, all displayed pixels (X1, Y1) to (X3, Y3) come to have a specified wavelength color, so that they enter an entire planar resetting state.

After that, based on the control of the controller 51, the row driver 53 selects one row electrode by applying bipolar pulses having voltage V3 so as to perform sequential scanning from row electrode X1 to row electrodes X2 and X3, as shown in Fig. 10. Also, based on the control of the controller 51, the column driver 52 selectively applies inverse-characteristic bipolar pulses -V4 to column electrodes Y1 to Y3 in response to timing of row electrode selection, as shown in Fig. 10. Specifically, the column driver 52 applies inverse-characteristic bipolar pulses -V4 to column electrodes Y1 and Y2 when row electrode X1 is selected, applies inverse-characteristic bipolar pulses -V4 to column electrodes Y2 and Y3 when row electrode X2 is selected, and applies inverse-characteristic bipolar pulses -V4 to column electrodes Y2 and Y3 when row electrode X3 is selected.

As shown in Fig. 11, a bipolar pulse voltage of V3+V4 > Vfs is applied between pixel electrodes in which the bipolar pulses are applied to the row and column electrodes with the same timing. Thus, the cholesteric liquid crystal layer 14 between two electrodes, the transparent column electrode 12 and the transparent row electrode 15, at the corresponding pixel position, enters the focal conic state to become transparent. In other words, selected six pixels, (X1, Y1), (X1, Y2), (X2, Y2), (X2, Y3), (X3, Y2), and (X3, Y3), are displayed in black, and the other pixels remain displayed in specified wavelength color.

In the liquid crystal driving circuit 41 to which the present invention is applied, when, for example, V3 = V4, a driving voltage of the column driver 52 and the row driver 53 is (V3+V4)/2. Since V3+V4 > Vfs and voltage value Vps is approximately double voltage value Vfs, (V3+V4) ≈ 1/2(V1+V2) holds. Therefore, in the liquid crystal driving circuit 41 to which the present invention is applied, compared with the case of the related art, each driving voltage of the column driver 52 and the row driver 53 can be reduced to approximately a half.

As described above, in the liquid crystal display device including the liquid crystal driving circuit 41 to which the present invention is applied, by performing display resetting, arbitrary pixel inversion from a specified wavelength color to black can be performed while reducing a driver breakdown voltage.

In addition, based on reduction in the driving voltage and breakdown voltage of drivers (here, the column driver 52 and the row driver 53) in the liquid crystal driving circuit for driving the cholesteric liquid crystal panel 1, elements whose package is small can be selected for the drivers. Thus, liquid crystal display device size can be reduced.

Furthermore, based on a reduction in the driving voltage of the drivers in the liquid crystal driving circuit for driving the cholesteric liquid crystal panel 1, one in which electric double layer capacitors that are connected in series to each other, etc., can be used as a battery for supplying power to the drivers (for example, by further stepping up the voltage by using one in which electric double layer capacitors having capacity of 2.5 V are connected in series to one another, the required voltage value can be sufficiently supplied). Thus, liquid crystal display device size can be further reduced.

In addition, by applying the present invention, reduction in the size of power supply units, such as the liquid crystal driving circuit for driving the cholesteric liquid crystal panel 1 and the battery, and low voltage driving are realized. Thus, the liquid crystal display device including the liquid crystal driving circuit 41 to which the present invention is applied can be used as a display device for use in a small information processing device such as a PDA, a timepiece, and an IC card.

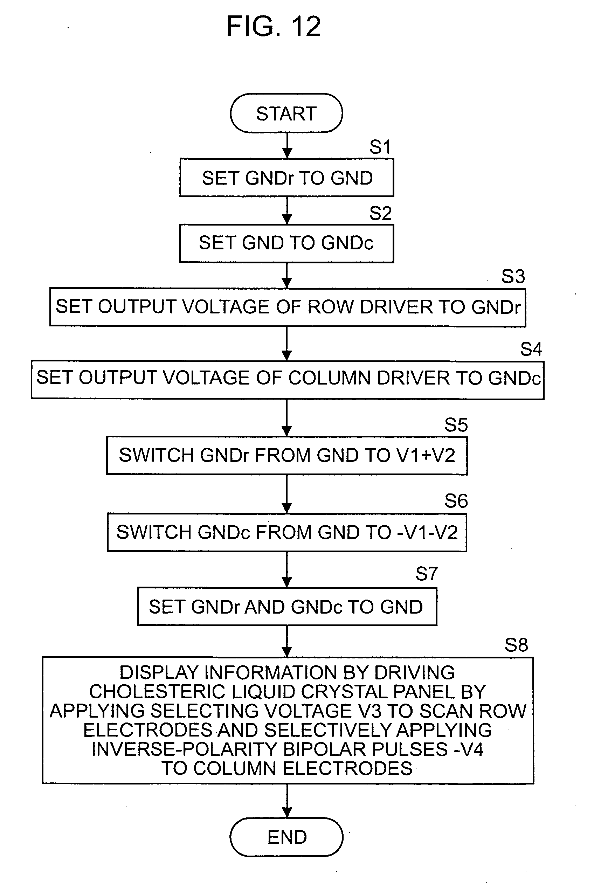

Next, processing of the liquid crystal driving circuit 41 to which the present invention is applied is described with reference to the flowchart in Fig. 12.

In step S1, the controller 51 controls the switch 55 to set GNDr supplied to the row driver 53 to GND, that is, zero volts.

In step S2, the controller 51 controls the switch 54 to set GNDc supplied to the column driver 52 to GND, that is, zero volts.

In step S3, the controller 51 controls the column driver 52 to set the output voltage of the row driver 53 to GNDr.

In step S4, the controller 51 controls the column driver 52 to set the output voltage of the column driver 52 to GNDc.

Processing in steps S1 to S4 supplies zero volts to the transparent column electrodes 12 and the transparent row electrodes 15 corresponding to all the pixel positions of the cholesteric liquid crystal panel. Thus, the potential differences of all inter-pixel electrodes are zero volts.

In step S5, the controller 51 controls the switch 55 to switch GNDr supplied to the row driver 53 from GND to (V1+V2) during a time corresponding to a predetermined pulse width.

In step S6, the controller 51 controls the switch 54 to switch GNDc supplied to the column driver 52 from GND to (-V1-V2) during a time corresponding to a predetermined pulse width.

Processing in steps S5 and S6 applies a bipolar pulse voltage of V1+V2 to all the pixel electrodes (all the cross points of the transparent column electrodes 12 and the transparent row electrodes 15) in the cholesteric liquid crystal panel 1. Thus, information held before the voltage is applied is reset.

In step S7, the controller 51 controls the switches 54 and 55 to set, to GND, GNDr supplied to the row driver 53 and GNDc supplied to the column driver 52.

Processing in step S7 supplies zero volts again to the transparent column electrodes 12 and the transparent row electrodes 15 corresponding to all the pixel positions in the cholesteric liquid crystal panel 1. Thus, the potential differences of all the inter-pixel electrodes have zero volts again.

In step S8, the controller 51 controls the row driver 53 to apply selecting voltage V3 to scan the row electrodes, and controls the column driver 52 to selectively apply inverse-polarity bipolar pulses -V4 to the column electrodes, whereby the cholesteric liquid crystal panel is driven to display information before the process ends.

For example, when the voltage is applied to column electrodes Y1 to Yn of the transparent column electrode 12 in the cholesteric liquid crystal panel 1 by the column driver 52, and the voltage is applied to row electrodes X1 to Xm of the transparent row electrode 15 by the row driver 53, the bipolar pulse voltages shown in Fig. 11 are applied to the pixel electrodes corresponding to pixels (X1, Y1) to (X3, Y3). Accordingly, after entire planar resetting is performed, among the nine pixels composed of 3 × 3 pixels in the cholesteric liquid crystal panel 1, as shown in Fig. 6, six pixels (X1, Y1), (X1, Y2), (X2, Y2), (X2, Y3), (X3, Y2), and (X3, Y3) are displayed in black and the other pixels are displayed in specified wavelength color.

In the above processing, in the liquid crystal display device using cholesteric liquid crystal capable of holding previously displayed information without being supplied with power, the inter-electrode potential difference required for performing entire planar resetting by setting the cholesteric liquid crystal in all the inter-pixel-positions to be in the planar state can be generated by switching the voltage values of GNDr and GNDc supplied to the row driver 53 and the column driver 52. The switching of the voltage values of GNDr and GNDc can be performed by using the switches 54 and 55, which are formed by, for example, FETs.

Here, the case of performing bicolor display has been described. However, it is obvious to apply the present invention to the case of performing multicolor display by a liquid crystal display device using cholesteric liquid crystal.

Since, in displaying information after entire resetting to white, a method similar to that in the liquid crystal display device of the related art which uses cholesteric liquid crystal is used, the breakout voltages required for the row driver 53 and the column driver 52 are determined by the inter-pixel-electrode voltage required for setting the cholesteric liquid crystal to the focal conic state. In other words, in the liquid crystal display device including the liquid crystal driving circuit 41 to which the present invention is applied, each breakout voltage required for the row driver 53 and the column driver 52 can be reduced to approximately half of that in the case of the related art.

Therefore, according to the liquid crystal display device including the liquid crystal driving circuit 41 to which the present invention is applied, the color of arbitrary pixels can be inverted from a specified wavelength color to black while suppressing a driver breakout voltage, thus realizing size reduction and cost reduction concerning the liquid crystal driving circuits for driving the cholesteric liquid crystal panel 1.

The above-described consecutive processing can be also performed by software. The software is installed from a recording medium to a computer in which programs constituting the software are built in dedicated hardware, or, for example, a multipurpose personal computer or the like in which, by installing various types of programs, various types of functions can be executed.

As shown in Fig. 9, this recording medium includes a package medium which is distributed for providing a program to a user separately for the computer, and which includes a magnetic disk 61 (including a flexible disk), an optical disk 62 (including a CD-ROM (Compact Disk-Read Only Memory) or a DVD (Digital Versatile Disk)), a magneto-optical disk 63 (including an MD (Mini-Disk) (trademark)), or a semiconductor memory 64, in which a program is recorded.

### Industrial Applicability

According to the present invention, information can be displayed on a display device using liquid crystal display elements. In particular, resetting of a display on a display unit having cholesteric liquid crystal and writing of information can be performed with a low driving voltage.

In addition, according to another aspect of the present invention, liquid crystal display elements can be driven with a low voltage as well as liquid crystal display elements can be driven.

## Claims

1. A display device having display means in which, by applying voltages to first electrodes and second electrodes, the state of cholesteric liquid crystal is changed to display information, the display device comprising:
first driving means for applying a voltage to the first electrodes;
second driving means for applying a voltage to the second electrodes; and
control means for controlling the operation of the first driving means and the second driving means, the voltage value of a first reference voltage supplied to the first driving means, and the voltage value of a second reference voltage supplied to the second driving means,
wherein, when the control means sets the cholesteric liquid crystal to a planar state, the control means controls the operation of the first driving means and the second driving means so that the first driving means applies the first reference voltage to the first electrodes and the second driving means applies the second reference voltage to the second electrodes, and controls the voltage values of the first reference voltage and the second reference voltage so that the cholesteric liquid crystal exhibits the planar state.

2. The display device according to claim 1, wherein:
the first driving means is supplied with a first driving voltage having a voltage value different from that of the first reference voltage;
the second driving means is supplied with a second driving voltage having a voltage value different from that of the first reference voltage; and
when the control means sets the cholesteric liquid crystal to a focal conic state, the control means controls the operation of the first driving means and the second driving means so that the first driving means applies the first driving voltage to the first electrodes and the second driving means applies the second driving voltage to the second electrodes.

3. The display device according to claim 1, further comprising:
first switching means for selectively switching the voltage value of the first reference voltage supplied to the first driving means between a first voltage value and zero volts; and
second switching means for selectively switching the voltage value of the second reference voltage supplied to the second driving means between a second voltage value and zero volts,
wherein, when the control means sets the cholesteric liquid crystal to the planar state, the control means controls the operation of the first driving means and the second driving means so that the first driving means applies the first reference voltage to the first electrodes and the second driving means applies the second reference voltage to the second electrodes, and further controls the first switching means and the second switching means so that the voltage value of the first reference voltage supplied to the first driving means is set as the first voltage value and the voltage value of the second reference voltage supplied to the second driving means is set as the second voltage value.

4. The display device according to claim 1, wherein the display means has the cholesteric liquid crystal, which has a plurality of portions reflecting light components having different wavelength bands in the planar state.

5. A display method for a display device having a display unit which displays information with cholesteric liquid crystal by applying voltages to first electrodes and second electrodes, the display method including:
a first reference-voltage applying step of applying a first reference voltage to the first electrodes;
a second reference-voltage applying step of applying a second reference voltage to the second electrodes;
a first-reference-voltage control step of controlling the voltage value of the first reference voltage;
a second-reference-voltage control step of controlling the voltage value of the second reference voltage; and
a display control step of controlling the display of the information on the display unit by applying, to the first electrodes and the second electrodes, a first driving voltage and a second driving voltage which differ from the first reference voltage and the second reference voltage.

6. A liquid crystal driving circuit for driving liquid crystal display elements including cholesteric liquid crystal, the liquid crystal driving circuit comprising:
first driving means for applying a voltage to first electrodes of the liquid crystal display elements;
second driving means for applying a voltage to second electrodes of the liquid crystal display elements; and
control means for controlling the operation of the first driving means and the second driving means, the voltage value of a first reference voltage supplied to the first driving means, and the voltage value of a second reference voltage supplied to the second driving means,
wherein, when the control means sets the cholesteric liquid crystal to a planar state, the control means controls the operation of the first driving means and the second driving means so that the first driving means applies the first reference voltage to the first electrodes and the second driving means applies the second reference voltage to the second electrodes, and controls the voltage values of the first reference voltage and the second reference voltage so that the cholesteric liquid crystal exhibits the planar state.

7. A liquid crystal driving method for a liquid crystal driving circuit which drives liquid crystal display elements including cholesteric liquid crystal by applying voltages to first electrodes and second electrodes, the liquid crystal driving method including:
a first reference-voltage applying step of applying a first reference voltage to the first electrodes;
a second reference-voltage applying step of applying a second reference voltage to the second electrodes;
a first-reference-voltage control step of controlling the voltage value of the first reference voltage;
a second-reference-voltage control step of controlling the voltage value of the second reference voltage; and
a driving-voltage-application control step of controlling application, to the first electrodes and the second electrodes, of a first driving voltage and a second driving voltage which differ from the first reference voltage and the second reference voltage.

## Amended claims

### Amended claims under Art. 19.1 PCT

**1.** (Amended) A display device comprising:
display means in which, by applying voltages to row electrodes and column electrodes, the state of cholesteric liquid crystal is changed to display information;
a row driver for applying a voltage to the row electrodes;
a column driver for applying a voltage to the column electrodes;
row-driver-reference-voltage switching means for switching a first reference voltage supplied to the row driver between a first voltage having a voltage value obtained by adding values V1 and V2, and zero volts;
column-driver-reference-voltage switching means for switching a second reference voltage supplied to the column driver between a second voltage which is reverse in polarity to the first voltage, and zero volts; and
control means for controlling the operation of the row driver and the column driver, the row-driver-reference-voltage switching means, and the column-driver-reference-voltage switching means,
wherein, when the control means sets the cholesteric liquid crystal to a planar state, after controlling the row-driver-reference-voltage switching means to set the first reference voltage as the first voltage, the control means controls the column-driver-reference-voltage switching means to set the second reference voltage as the second voltage, and the control means controls the row driver and the column driver so as not to apply driving voltages to the row electrodes and the column electrodes.

**2.** (Amended) The display device according to claim 1, wherein:
the row driver is supplied with a first bipolar driving voltage having a voltage value whose absolute value is equal to value V3;
the column driver is supplied with a second bipolar driving voltage having a voltage value whose absolute value is equal to value V4;
the first bipolar driving voltage and the second bipolar driving voltage each have a voltage value in which the sum of values V3 and V4 is approximately a half of the sum of values V1 and V2; and
when the control means sets the cholesteric liquid crystal to a focal conic state, the control means controls the row driver to sequentially apply the first bipolar driving voltage so as to scan the row electrodes, and controls the column driver to selectively apply, to the row electrodes, the second bipolar driving voltage, which is reverse in polarity to the first bipolar driving voltage applied so as to scan the row electrodes.

**3.** (Cancelled)

**4.** (Cancelled)

**5.** (Amended) A display method for a display device comprising a display unit which displays information with cholesteric liquid crystal by applying voltages to row electrodes and column electrodes, the display method including:
a first reference-voltage applying step of applying a first reference voltage of zero volts to the row electrodes;
a second reference-voltage applying step of applying the first reference voltage of zero volts to the column electrodes;
a first reference-voltage control step of controlling a reference voltage applied to the row electrodes to perform switching from the first reference voltage of zero volts to a second reference voltage having a voltage value obtained by adding values V1 and V2;
a second reference-voltage control step of controlling a reference voltage applied to the column electrodes to perform switching the first reference voltage of zero volts to a third reference voltage which is reverse in polarity to the second reference voltage; and
a display control step of controlling the display of the information on the display unit by sequentially applying a first bipolar driving voltage so as to scan the column electrodes, the first bipolar driving voltage having a voltage value whose absolute value is equal to value V3, and selectively applying a second bipolar driving voltage to the column electrodes, the second bipolar driving voltage having a voltage value whose absolute value is equal to value V4 and being reverse in polarity to the first bipolar driving voltage applied so as to scan the row electrodes.

**6.** (Amended) A liquid crystal driving circuit for driving liquid crystal display elements including cholesteric liquid crystal, the liquid crystal driving circuit comprising:
a row driver for applying a voltage to row electrodes of the liquid crystal display elements;
a column driver for applying a voltage to column electrodes of the liquid crystal display elements;
row-driver-reference-voltage switching means for selectively switching a first reference voltage supplied to the row driver between a first voltage having a voltage value obtained by adding values V1 and V2, and zero volts;
column-driver-reference-voltage switching means for selectively switching a second reference voltage supplied to the column driver between a second voltage being reverse in polarity to the first voltage, and zero volts; and
control means for controlling the operation of the row driver and the column driver, the row-driver-reference-voltage switching means, and the column-driver-reference-voltage switching means,
wherein, when the control means sets the cholesteric liquid crystal to a planar state, after controlling the row-driver-reference-voltage switching means to set the first reference voltage as the first voltage, the control means controls the column-driver-reference-voltage switching means to set the second reference voltage as the second voltage, and the control means controls the row driver and the column driver so as not to apply driving voltages to the row electrodes and the column electrodes.

**7.** (Amended) A liquid crystal driving method for a liquid crystal driving circuit which drives liquid crystal display elements including cholesteric liquid crystal by applying voltages to row electrodes and column electrodes, the liquid crystal driving method including:
a first reference-voltage applying step of applying a first reference voltage of zero volts to the row electrodes;
a second reference-voltage applying step of applying the first reference voltage of zero volts to the column electrodes;
a first reference-voltage control step of controlling a reference voltage supplied to the row electrodes to perform switching from the first reference voltage of zero volts to a second reference voltage having a voltage value obtained by adding values V1 and V2;
a second reference-voltage control step of controlling a reference voltage supplied to the column electrodes to perform switching from the first reference voltage of zero volts to a third reference voltage being reverse in polarity to the second reference voltage;
a driving-voltage-application control step of controlling sequential scanning application of a first bipolar driving voltage having a voltage value whose absolute value is equal to value V3, and controlling selective application, to the column electrodes, of a second bipolar driving voltage having a voltage value whose absolute value is equal to value V4 and being reverse in polarity to the first bipolar driving voltage applied so as to scan the row electrodes.

**8.** (Added) The display method according to claim 5, wherein the first bipolar driving voltage and the second bipolar driving voltage each have a voltage value in which the sum of values V3 and V4 is approximately a half of the sum of values V1 and V2.

**9.** (Added) The display method according to claim 6, wherein:
the row driver is supplied with a first bipolar driving voltage having a voltage value whose absolute value is equal to value V3;
the column driver is supplied with a second bipolar driving voltage having a voltage value whose absolute value is equal to value V4;
the first bipolar driving voltage and the second bipolar driving voltage each have a voltage value in which the sum of values V3 and V4 is approximately a half of the sum of values V1 and V2; and
when the control means sets the cholesteric liquid crystal to a focal conic state, the control means controls the row driver to sequentially apply the first bipolar driving voltage so as to scan the row electrodes, and controls the column driver to selectively apply, to the column electrodes, the second bipolar driving voltage, which is reverse in polarity to the first bipolar driving voltage applied so as to scan the row electrodes.

**10.** (Added) The liquid crystal driving method according to claim 7, wherein the first bipolar driving voltage and the second bipolar driving voltage each have a voltage value in which the sum of values V3 and V4 is approximately a half of the sum of values V1 and V2.

Statement under Art. 19.1 PCT
In claims 1, 5, 6, and 7, it is clarified that, when the cholesteric liquid crystal is set to the planer state, after the reference voltage of the row driver is set to the first voltage which has a voltage value obtained by adding values V1 and V2, the reference voltage of the row driver is set to the second voltage which is reverse in polarity to the first voltage, and that no driving voltages are applied to the row electrodes and the column electrodes.

The present invention uses low driving voltages to enable resetting of display by the cholesteric liquid crystal and writing of information.
